# EUROPÄISCHE PATENTSCHRIFT

(11) **EP 3 192 697 B1**
(45) Veröffentlichungstag und Bekanntmachung des Hinweises auf die Patenterteilung: **26.06.2019**
(21) Anmeldenummer: 16002668.8
(22) Anmeldetag: 16.12.2016
(51) Int. Cl.: B60N 3/16, B60N 3/10, B60N 3/00, B61D 33/00, B64D 11/06

(54) **TISCH FÜR EINE KABINE EINES FAHRZEUGS, TEMPERIERUNGSVORRICHTUNG FÜR SPEISEN, SPEISENTEMPERIERUNGSSYSTEM UND VERFAHREN ZUM TEMPERIEREN VON SPEISEN IN EINER KABINE EINES FAHRZEUGS**
TABLE FOR A CABIN OF A VEHICLE, TEMPERING DEVICE FOR FOOD, FOOD TEMPERATURE CONTROL SYSTEM AND METHOD FOR CONTROLLING THE TEMPERATURE OF FOOD IN A CABIN OF A VEHICLE
TABLE DE CABINE DE VÉHICULE, DISPOSITIF DESTINÉ À ATTIÉDIR DES REPAS, SYSTÈME DESTINÉ À ATTIÉDIR ET PROCÉDÉ DESTINÉ À ATTIÉDIR DES REPAS DANS UNE CABINE DE VÉHICULE

(30) Priorität: 16.12.2015 DE 102015016317
(43) Veröffentlichungstag der Anmeldung: 19.07.2017
(73) Patentinhaber: Weigele, Uwe Dieter, 88605 Meßkirch (DE)
(72) Erfinder: Weigele, Uwe Dieter, 88605 Meßkirch (DE); Weigele, Leonardo, 88605 Meßkirch (DE)
(74) Vertreter: Fugmann, Winfried

(56) Entgegenhaltungen:
- WO-A2-2015/162575
- DE-A1-102013 214 901
- DE-U1- 29 816 113
- US-A1- 2005 121 978
- US-A1- 2013 093 220
- US-A1- 2013 327 255

## Beschreibung

Die vorliegende Erfindung betrifft einen Tisch für eine Kabine eines Fahrzeugs, der eine Tischplatte und mindestens eine erste Energieübertragungseinrichtung umfasst, eine Temperierungsvorrichtung für Speisen, ein Speisentemperierungssystem sowie ein Verfahren zum Temperieren von Speisen in einer Kabine eines Fahrzeugs.

Aus US 2013/0093220 A1 ist ein Serviertisch für einen Passagiersitz bekannt, der eine innere Ablage zum Halten eines tragbaren elektronischen Geräts umfasst. Der Serviertisch weist Anschlüsse für Audio-, USB-, Strom- und andere Verbindungen mit einem Gerät des Passagiers auf. Das elektronische Gerät kann beispielsweise induktiv aufgeladen werden. Gemäß US 8,667,904 B2 weist ein Serviertisch für einen Passagiersitz eines Luftfahrzeugs eine Stütze auf, die am hinteren Ende des Serviertischs angeordnet ist und die zum Halten eines tragbaren elektronischen Geräts in einen gewünschten Betrachtungswinkel drehbar ist. Die Stütze kann drahtlose Strom- oder Datenverbindungen bereitstellen, etwa eine induktive Batterieaufladung oder eine kurzreichweitige Datenverbindung zu tragbaren elektronischen Geräten. Weiter ist aus US 2015/0020715 A1 ein Serviertisch bekannt, der eine gelenkige Stütze für tragbare elektronische Geräte aufweist. Ein elektronisches Gerät kann magnetisch in einer Halterung eines rotierenden Abschnitts der gelenkigen Stütze gehalten werden. Tragbare elektronische Geräte können durch magnetischen Kontakt oder drahtlos, etwa durch Induktion, geladen werden.

Die vorgenannten bekannten Tische sind hinsichtlich ihrer Funktionalität jedoch beschränkt. Insbesondere hat sich gezeigt, dass die Funktionalität nicht optimal ist, wenn der Tisch zum Servieren warmer Speisen für einen Passagier eines Fahrzeugs genutzt werden soll.

Die Gebrauchsmusterschrift DE 298 16 113 U1 offenbart eine Kücheneinheit für Fahrzeuge, die aus einem feststehenden und einem gegenüber diesem beweglichen Teil besteht. Der feststehende und der bewegliche Teil sind um eine Säule gruppiert, die eine Drehachse darstellt. Im mittleren Bereich der Säule ist ein Schwenkarm angeordnet, der zwischen einer vertikalen und einer horizontalen Stellung klappbar ist und der eine Kochstelle mit mehreren Feuerstellen beinhaltet. Zusammen mit dem Schwenkarm kann eine Stellplatte zwischen einer vertikalen und einer horizontalen Stellung geklappt werden.

Die internationale Veröffentlichung WO 2015/ 162575 A2 betrifft eine Konfiguration einer Flugzeug-Bordküche, die sich entlang einer Längsachse eines Rumpfs eines Flugzeugs erstreckt. Die Bordküche umfasst eine Mehrzahl von Bordküchenmodulen, die zwischen einem vorderen und einem hinteren Ende der Bordküche angeordnet sind.

Es ist Aufgabe der vorliegenden Erfindung, einen verbesserten Tisch für eine Kabine eines Fahrzeugs anzugeben, der insbesondere eine verbesserte Funktionalität beim Servieren warmer Speisen für einen Passagier des Fahrzeugs aufweist. Weiter ist es eine Aufgabe der vorliegenden Erfindung, eine Temperierungsvorrichtung für Speisen, ein Speisentemperierungssystem sowie ein Verfahren zum Temperieren von Speisen in einer Kabine eines Fahrzeugs anzugeben.

Diese Aufgabe wird durch einen Tisch gemäß Anspruch 1, durch eine Temperierungsvorrichtung gemäß Anspruch 13, durch ein Speisentemperierungssystem gemäß Anspruch 16 sowie durch ein Verfahren gemäß Anspruch 17 gelöst.

Ein erfindungsgemäßer Tisch ist für die Verwendung in einer Kabine eines Fahrzeugs ausgebildet. Das Fahrzeug kann beispielsweise ein Luftfahrzeug, ein schienengebundenes oder nicht schienengebundenes Bodenfahrzeug, wie etwa ein Personenkraftwagen, ein Autobus oder ein Waggon eines Zugs, oder auch ein Wasserfahrzeug sein. Mit "Kabine" wird im Rahmen der vorliegenden Anmeldung ein geschlossener oder offener Bereich des Fahrzeugs bezeichnet, der für den Aufenthalt von Personen beim Betrieb des Fahrzeugs bestimmt ist. Der Tisch ist insbesondere an einem Sitzplatz für einen Passagier des Fahrzeugs anordenbar, so dass sich der Tisch in einer für den Gebrauch durch einen Passagier, der auf dem Sitzplatz sitzt, geeigneten Position befindet. Der Tisch kann an dem betreffenden Passagiersitz, an einem anderen Passagiersitz oder auch an einem Boden, einer Decke oder einer Wand der Kabine des Fahrzeugs befestigt sein. Der Tisch kann insbesondere von dem Passagier, der auf dem Sitzplatz sitzt, während der Fahrt des Fahrzeugs benutzt werden, beispielsweise als Ablage oder als Serviertisch, auf dem während der Fahrt servierte Speisen zum Verzehr durch den Passagier abgestellt werden. Der Tisch kann auch mehreren Sitzplätzen zugeordnet sein und von mehreren Passagieren benutzbar sein.

Ein erfindungsgemäßer Tisch umfasst eine Tischplatte, die eine zumindest weitgehend ebene Oberseite aufweist, die als Abstellfläche für unterschiedliche Gegenstände nutzbar ist. Weiter umfasst der Tisch mindestens eine erste Energieübertragungseinrichtung. Erfindungsgemäß ist die mindestens eine erste Energieübertragungseinrichtung in die Tischplatte integriert. Die erste Energieübertragungseinrichtung ist insbesondere an der Oberseite der Tischplatte angeordnet, um durch die Tischoberfläche hindurch Energie zu übertragen. In dem Fall, dass die Tischplatte eine im Wesentlichen ebene Oberseite und eine im Wesentlichen ebene Unterseite aufweist, ist die Energieübertragungseinrichtung zwischen der Oberseite und der Unterseite angeordnet und zur Energieübertragung durch die Oberseite ausgebildet. Die erste Energieübertragungseinrichtung ist hierfür insbesondere dicht unter der Tischoberfläche an der Oberseite angeordnet. Der mindestens einen ersten Energieübertragungseinrichtung kann eine elektronische Steuerungseinrichtung zugeordnet sein. Die elektronische Steuerungseinrichtung kann beispielweise ebenfalls in die Tischplatte oder in den Tisch integriert sein, kann aber auch außerhalb des Tischs angeordnet sein.

Weiterhin ist die erste Energieübertragungseinrichtung erfindungsgemäß zur drahtlosen, insbesondere induktiven, Energieversorgung einer Temperierungsvorrichtung für Speisen ausgebildet. Die Energieübertragungseinrichtung ist somit zur drahtlosen, insbesondere induktiven, Energieübertragung an eine derartige Temperierungsvorrichtung ausgebildet, so dass ausreichend Energie an die Temperierungsvorrichtung übertragen werden kann, um diese mit der für den Betrieb der Temperierungsvorrichtung notwendigen thermischen und/oder elektrischen Energie zu versorgen. Die Energieübertragungseinrichtung ist insbesondere derart ausgebildet, dass die Temperierungsvorrichtung dann mit einer für den Betrieb ausreichenden Leistung versorgbar ist, wenn die Temperierungsvorrichtung auf der Oberseite des Tischs angeordnet ist bzw. auf der Tischoberfläche der Oberseite aufliegt. Die Temperierungsvorrichtung ist insbesondere ein Warmhalteteller für Speisen oder eine Warmhalteplatte, auf die ein warm zu haltender Teller gestellt werden kann. Die thermische bzw. elektrische Leistung, die für den Betrieb einer derartigen, beispielsweise als Warmhalteteller oder Warmhalteplatte ausgebildeten, Temperierungsvorrichtung erforderlich ist, liegt typischerweise im Bereich zwischen etwa 10 W und etwa 200 W. Die Energieübertragungseinrichtung ist somit insbesondere für eine Übertragung einer elektrischen Leistung von mehr als etwa 100 W ausgebildet. Die Temperierungsvorrichtung kann auch zum Erwärmen von Speisen dienen, wobei ggf. eine Leistung von mehr als etwa 200 W übertragbar sein kann. Die Temperierungsvorrichtung kann auch als elektrisch betriebene Kühlvorrichtung zum Kühlen von Speisen ausgebildet sein. Zur drahtlosen Energieübertragung kann die erste Energieübertragungseinrichtung nach einem bekannten Standard, etwa dem Qi-Standard (beispielsweise Version 1.2) arbeiten.

Dadurch, dass die Energieübertragungseinrichtung des Tischs in der Tischplatte angeordnet ist und zur Übertragung der zum Betrieb einer Temperierungsvorrichtung für Speisen ausreichenden Leistung ausgebildet ist, wird es ermöglicht, eine derartige Temperierungsvorrichtung auf die Tischplatte zu stellen und zu betreiben, ohne die Nutzbarkeit des Tischs dann, wenn keine Temperierungsvorrichtung auf dem Tisch steht, einzuschränken. Die derart verbesserte Funktionalität der Tischs erleichtert es somit, einem Passagier des Fahrzeugs Speisen mit einer gewünschten Temperatur bereitzustellen und bereitzuhalten, auch dann, wenn der Passagier die Speisen nicht unmittelbar zu sich nehmen kann oder möchte. Dies ist beispielsweise dann besonders vorteilhaft, wenn der Serviervorgang in einem Flugzeug unterbrochen werden muss und/oder wenn die Behälter für die Speisen offen sind und nicht ohne Weiteres ein längeres Warmhalten der Speisen gewährleisten.

Gemäß einer bevorzugten Ausführungsform der Erfindung ist der mindestens einen ersten Energieübertragungseinrichtung eine elektronische Steuerungseinrichtung zugeordnet, und diese ist derart eingerichtet, dass eine Energieübertragung nur dann oder nur dann mit einer für den Betrieb der Temperierungsvorrichtung ausreichenden Leistung erfolgt, wenn die Temperierungsvorrichtung zumindest näherungsweise an einer Sollposition angeordnet ist. Vorzugsweise ist die mindestens eine erste Energieübertragungseinrichtung derart an die Temperierungsvorrichtung angepasst, dass die Temperierungsvorrichtung dann, wenn sie an der Sollposition auf der Oberseite der Tischplatte angeordnet ist, den Wirkungsbereich der mindestens einen ersten Energieübertragungseinrichtung vollständig überdeckt. Auf diese Weise kann es sicher vermieden werden, dass weitere Gegenstände, insbesondere metallische Gegenstände, die anstelle oder neben der Temperierungsvorrichtung auf der Oberseite der Tischplatte liegen, durch die von der Energieübertragungseinrichtung übertragene Energie erwärmt oder sogar beschädigt werden, und ferner kann eine Verletzungsgefahr für einen Benutzer vermieden werden.

Um zu ermitteln, ob die Temperierungsvorrichtung an der Sollposition auf der Tischoberfläche oder zumindest ausreichend nahe an der Sollposition angeordnet ist, kann die Steuerungseinrichtung eine Positionsdetektionseinrichtung aufweisen oder für den Empfang eines Signals einer solchen ausgebildet sein, wobei die Positionsdetektionseinrichtung einen Sensor zur Erfassung der Position einer Temperierungsvorrichtung auf der Oberseite der Tischplatte umfassen kann. Die elektronische Steuerungseinrichtung kann auch ausgebildet sein, um eine induktive Kopplung zwischen der mindestens einen ersten Energieübertragungseinrichtung und der Temperierungsvorrichtung zu erfassen und die mindestens eine erste Energieübertragungseinrichtung nur dann für eine Energieübertragung anzusteuern, wenn die erfasste Kopplung anzeigt, dass die Temperierungsvorrichtung auf der Oberseite des Tischs und ausreichend nahe an der Sollposition steht. Die Erfassung der Übereinstimmung der Position der Temperierungsvorrichtung mit der Sollposition kann durch eine entsprechende Ausgestaltung der Oberseite des Tischs und einer Unterseite der Temperierungsvorrichtung vereinfacht werden; dabei weist die Tischoberseite eine Vertiefung auf, die mit einem Vorsprung an der Unterseite der Temperierungsvorrichtung zusammenwirkt, so dass nur an der Sollposition eine für die Energieübertragung ausreichende magnetische Kopplung besteht. Alternativ oder zusätzlich kann ein mechanisches Positionierungsmittel etwa in Form einer Raste zur Positionierung der Temperierungsvorrichtung an der Sollposition auf der Oberseite des Tischs vorgesehen sein, wobei die Raste mit einem Sensor oder einem Schalter zur Aktivierung der Energieübertragungseinrichtung versehen sein kann.

In bevorzugter Weise weist der Tisch eine Nahfeldkommunikationseinrichtung auf, die insbesondere eine Datenübertragung zwischen dem Tisch und der Temperierungsvorrichtung ermöglicht. Eine derartige Nahfeldkommunikationseinrichtung kann in an sich bekannter Weise ausgebildet sein, beispielsweise zur Datenübertragung mittels Bluetooth, WLAN, Infrarotstrahlung oder in anderer Weise. Beispielsweise kann der Tisch ein RFID (Radio Frequency Identification, Funkfrequenz-Identifizierung) - Lesegerät umfassen, das zum Auslesen von Daten eines in oder an der Temperierungsvorrichtung angeordneten Transponders (RFID-Tag) ausgebildet ist. Die vom RFID-Lesegerät oder mittels einer anderen Nahfeldkommunikationseinrichtung erfassten Daten können beispielsweise Identifikationsdaten der Temperierungsvorrichtung, Eigenschaften der Temperierungsvorrichtung wie etwa die Leistungsaufnahme oder auch Informationen über mit der Temperierungsvorrichtung servierte Speisen umfassen. Dabei kann es vorgesehen sein, dass diese Daten an ein übergeordnetes Steuerungssystem übermittelt werden. Vorzugsweise ist die Nahfeldkommunikationseinrichtung für einen bidirektionalen Datenverkehr ausgebildet, es kann aber auch eine unidirektionale Datenübertragung von der Temperierungsvorrichtung zum Tisch bzw. zur Steuerungseinrichtung der mindestens einen ersten Energieübertragungseinrichtung vorgesehen sein. Die Nahfeldkommunikationsfeldeinrichtung ist vorzugsweise in den Tisch integriert, wobei die Nahfeldkommunikationsfeldeinrichtung ein Teil der elektronischen Steuerungseinrichtung sein kann; die Nahfeldkommunikationseinrichtung kann eine Antenne aufweisen, die ebenfalls in den Tisch integriert sein kann. Alternativ oder zusätzlich kann die Datenübertragung zwischen der Temperierungsvorrichtung und der Energieübertragungseinrichtung über die elektromagnetische Kopplung erfolgen, die zur Energieübertragung genutzt wird, insbesondere über die induktive Kopplung, beispielsweise gemäß dem oben genannten Standard für die drahtlose Energieübertragung. Auf diese Weise wird es ermöglicht, die Energieübertragungseinrichtung automatisch in einer Weise zu betreiben, die an die Eigenschaften der Temperierungsvorrichtung und/oder entsprechend den mit der Temperierungsvorrichtung servierten Speisen angepasst ist. Weiterhin können die erfassten Daten, beispielsweise Daten der servierten Speisen, auf einer Anzeige für einen an dem Tisch sitzenden Passagier angezeigt werden. Durch Übermittlung der erfassten Daten an ein übergeordnetes Steuerungssystem kann ferner beispielsweise ermittelt werden, wann welche Speisen an welchem Platz des Fahrzeugs serviert worden sind und durch Vergleich mit einer Vorgabe ggf. eine Korrekturaufforderung ausgelöst werden.

Insbesondere kann die Steuerungseinrichtung der mindestens einen ersten Energieübertragungseinrichtung derart eingerichtet sein, dass dann, wenn keine Nahfeldkommunikation zustande kommt, die Energieübertragungseinrichtung nicht aktiviert werden kann. Hierdurch kann es vermieden werden, dass Gegenstände, die anstelle der Temperierungsvorrichtung auf der Tischplatte liegen, durch Betreiben der Energieübertragungseinrichtung erwärmt werden können.

Weiterhin kann die Steuerungseinrichtung der mindestens einen ersten Energieübertragungseinrichtung derart eingerichtet sein, dass es erkannt werden kann, wenn ein elektronisches Gerät an oder nahe an der Sollposition auf der Oberseite der Tischplatte vorhanden ist, das ebenfalls mittels der ersten Energieübertragungseinrichtung betrieben oder geladen werden kann. Ein solches elektronisches Gerät kann beispielsweise ein Laptop-PC sein, der eine Leistung im Bereich von etwa 100 W oder höher zum Betrieb bzw. zum Aufladen benötigt, oder auch etwa ein Smartphone, ein Mobiltelefon, ein Tablet-PC, die eine geringere Leistung zum Aufladen erfordern; in entsprechender Weise kann ein Ladegerät eines elektronischen Geräts mit Energie versorgt werden. Hierdurch kann die Funktionalität des Tischs weiter verbessert werden.

Vorzugsweise umfasst die mindestens eine erste Energieübertragungseinrichtung mindestens eine Spule, die innerhalb der Tischplatte an einer Seite der Tischplatte angeordnet und zur induktiven Energieübertragung durch die Tischoberfläche der betreffenden Seite hindurch ausgebildet ist. Die Spule ist zumindest zu einer gegenüberliegenden Seite der Tischplatte hin abgeschirmt, beispielsweise durch eine Ferritplatte, wobei eine besonders wirksame Abschirmung etwa durch eine Schicht aus Mu-Metall sowie gegebenenfalls zusätzlich durch eine Aluminiumplatte und eine Kupferschicht erreicht werden kann. In besonders bevorzugter Weise ist die mindestens eine Spule in entsprechender Weise auch in seitlicher Richtung abgeschirmt. Die Spule kann insbesondere flach ausgebildet und in einem Topf aus Ferrit angeordnet sein, der zusätzlich mit Mu-Metall gekapselt sein kann und der zu der Seite der Tischplatte hin offen ist, zu der die induktive Energieübertragung erfolgt. Die mindestens eine erste Energieübertragungseinrichtung kann mehrere derart ausgebildete Spulen umfassen, die nebeneinander oder auch teilweise überlappend angeordnet sein können und die jeweils einzeln oder gemeinsam abgeschirmt sein können. Besonders bevorzugt sind alle Energieübertragungseinrichtungen des Tischs in der beschriebenen Weise ausgebildet. Hierdurch kann sowohl der Wirkungsgrad der Energieübertragung verbessert als auch eine unerwünschte Energieübertragung in andere Richtungen sowie eine entsprechende Belastung eines Passagiers, der an dem Tisch sitzt, vermieden werden.

Vorzugsweise hat die mindestens eine erste Energieübertragungseinrichtung eine Arbeitsfrequenz, mit der beispielsweise eine Spule zur induktiven Energieübertragung betrieben wird, unterhalb von etwa 150 kHz, insbesondere im Bereich von 0,8 bis 150 kHz, besonders bevorzugt im Bereich von etwa 70 kHz. Insbesondere können alle Energieübertragungseinrichtungen des Tischs mit Arbeitsfrequenzen im genannten Bereich arbeiten. Hierdurch kann vermieden werden, dass bei Aktivierung einer Energieübertragungseinrichtung Störfelder emittiert werden, die die Funktion elektronischer Systeme des Fahrzeugs beeinträchtigen könnten. Dies ist insbesondere bei Luftfahrzeugen von Bedeutung, wobei der Bereich unterhalb von 150 kHz in der Regel als unkritisch anzusehen ist. Weiterhin ist es bevorzugt, dass eine Spule zur induktiven Energieübertragung der mindestens einen ersten Energieübertragungseinrichtung, vorzugsweise aller Energieübertragungseinrichtungen des Tischs, mit einer zumindest nahezu sinusförmigen Spannung angesteuert wird, um die Erzeugung einer mögliche Störstrahlung zu minimieren.

Gemäß einer bevorzugten Ausführungsform der Erfindung ist die mindestens eine erste Energieübertragungseinrichtung mittels eines Schalters, der von einem Benutzer des Tisches manuell bedienbar ist, aktivierbar und/oder deaktivierbar; der Schalter ist beispielsweise am Tisch oder an einem Sitz, dem der Tisch zugeordnet ist, angeordnet. Hierdurch kann die Funktionalität des Tischs dahingehend verbessert werden, dass der Benutzer, der insbesondere ein auf dem dem Tisch zugeordneten Sitz sitzender Passagier ist, bestimmen kann, ob eine Energieversorgung der Temperierungsvorrichtung oder eines elektronischen Geräts auf dem Tisch stattfindet bzw. automatisch gesteuert stattfinden kann. Dabei können etwa durch Betätigen eines Bedienelements alle Energieübertragungseinrichtungen aktiviert werden, wobei nach kurzer Zeit automatisch diejenigen wieder deaktiviert werden, bei denen keine Energieabnahme durch eine Energieempfangseinrichtung erfolgt. In besonders bevorzugter Weise ist es alternativ oder zusätzlich vorgesehen, dass die mindestens eine erste Energieübertragungseinrichtung durch ein übergeordnetes Steuerungssystem des Fahrzeugs aktivierbar und/oder deaktivierbar ist. Dabei kann es vorgesehen sein, dass eine Deaktivierung durch das übergeordnete Steuerungssystem eine Aktivierung durch den am Tisch angeordneten Schalter verhindert. Auf diese Weise wird es ermöglicht, die Funktion der Energieübertragungseinrichtungen derart zu steuern, dass eine übermäßige Belastung des Bordnetzes vermieden werden kann. Dies ist insbesondere bei Luftfahrzeugen vorteilhaft, wenn während kritischer Flugphasen eine unnötige Belastung des Bordnetzes vermieden werden soll. Vorzugsweise sind alle Energieübertragungseinrichtungen des Tischs in der beschriebenen Weise durch einen vom Benutzer des Tischs bedienbaren Schalter und/oder durch das übergeordnete Steuerungssystem des Fahrzeugs aktivierbar und/oder deaktivierbar.

Gemäß einer besonders bevorzugten Ausführungsform der Erfindung umfasst der Tisch mindestens eine zweite Energieübertragungseinrichtung, die in vorteilhafter Weise ebenfalls in die Tischplatte integriert ist. Die mindestens eine zweite Energieübertragungseinrichtung ist vorzugsweise zur drahtlosen, insbesondere induktiven, Energieübertragung an ein elektronisches Gerät ausgebildet. In bevorzugter Weise ist die mindestens eine zweite Energieübertragungseinrichtung zur drahtlosen Übertragung einer geringeren Leistung ausgebildet als die mindestens eine erste Energieübertragungseinrichtung. Eine solche geringere Leistung, die insbesondere unterhalb von 100 W, beispielweise im Bereich von etwa 5 bis 10 W, liegen kann, ist für das induktive Laden vieler elektronischer Geräte ausreichend, beispielsweise eines Smartphones, eines Mobiltelefons oder eines Tablet-PCs. Auf diese Weise kann gleichzeitig zur Energieversorgung einer Temperierungsvorrichtung für Speisen ein Aufladen elektronischer Geräte ermöglicht und dadurch die Funktionalität des Tischs zusätzlich verbessert werden.

In vorteilhafter Weise kann die mindestens eine zweite Energieübertragungseinrichtung derart ausgebildet sein, dass dadurch eine Datenübertragung zwischen einem mittels der mindestens einen zweiten Energieübertragungseinrichtung aufgeladenen elektronischen Gerät und einem übergeordneten Datennetz vermittelt wird. Das Datennetz kann etwa ein Steuerungssystem des Fahrzeugs sein, wobei etwa passagierspezifische Daten eines Passagiers, der auf dem Sitzplatz sitzt, dem der Tisch zugeordnet ist, an das elektronische Gerät übermittelt werden können, ebenso wie beispielsweise eine Internetverbindung hergestellt werden kann. Die Datenübertragung zwischen der Energieübertragungseinrichtung und dem elektronischen Gerät kann insbesondere bei einer induktiven Energieübertragung gemäß dem oben erwähnten Standard erfolgen oder auch durch eine zusätzliche Nahfeldkommunikationseinrichtung, die vorzugsweise eine auf den Sitzplatz beschränkte Reichweite hat; die Kommunikation zwischen der Energieübertragungseinrichtung und dem Datennetz kann drahtlos erfolgen. Auch die mindestens eine erste Energieübertragungseinrichtung kann für eine entsprechende Datenverbindung ausgelegt sein.

Die mindestens eine zweite Energieübertragungseinrichtung kann neben der mindestens einen ersten Energieübertragungseinrichtung angeordnet und zum Hindurchwirken durch dieselbe Seite der Tischplatte ausgebildet sein. Die erste und die zweite Energieübertragungseinrichtung können jedoch auch an entgegengesetzten Seiten der Tischplatte angeordnet und zur Energieübertragung in entgegengesetzter Richtung ausgebildet sein. Dabei ist an einer ersten Seite der Tischplatte die mindestens eine erste Energieübertragungseinrichtung angeordnet, die zur Energieversorgung einer Temperierungsvorrichtung oder auch beispielsweise eines Laptop-Computers ausgebildet ist und zur Energieübertragung durch die Oberfläche der ersten Seite hindurchwirkt. An der der ersten gegenüberliegenden zweiten Seite der Tischplatte ist die mindestens eine zweite Energieübertragungseinrichtung angeordnet, so dass diese zur Energieübertragung durch die Oberfläche der zweiten Seite hindurchwirkt. Die erste und die zweite Energieübertragungseinrichtung sind somit derart ausgebildet und angeordnet, dass eine auf der ersten Seite der Tischplatte befindliche Temperierungsvorrichtung durch die mindestens eine erste Energieübertragungseinrichtung mit Energie versorgt werden kann, während ein elektronisches Gerät, wie etwa ein Smartphone, an der zweiten Seite der Tischplatte angeordnet werden kann, um dieses mittels der mindestens einen zweiten Energieübertragungseinrichtung aufzuladen. An der ersten und/oder der zweiten Oberfläche können weitere Energieübertragungseinrichtungen vorgesehen sein.

Weiterhin ist vorzugsweise an der ersten und/oder der zweiten Seite der Tischplatte, insbesondere zumindest an derjenigen Seite der Tischplatte, an der die mindestens eine zweite Energieübertragungseinrichtung zur Energieübertragung an ein elektronisches Gerät angeordnet ist, eine Halteeinrichtung zum Halten des elektronischen Geräts vorgesehen, beispielsweise ein Netz oder eine magnetische Halteeinrichtung. Es kann auch an mindestens einer Seite beispielsweise ein mit einem Deckel verschließbarer Hohlraum zur Aufnahme des elektronischen Geräts vorgesehen sein. Hierdurch wird eine besonders vielseitige Verwendung des Tischs ermöglicht, wobei beispielsweise dann, wenn auf der ersten Seite, die in diesem Fall nach oben gerichtet ist, die Temperierungsvorrichtung zum Temperieren von Speisen in Betrieb ist, gleichzeitig auf der zweiten Seite des Tischs, die dann nach unten gerichtet ist, ein elektronisches Gerät aufgeladen werden kann. Ebenso kann es hierdurch ermöglicht werden, ein elektronisches Gerät an der Unterseite des Tischs aufzuladen, wenn die Oberseite etwa als Ablage benutzt wird. Die Halteeinrichtung kann zudem ein Aufladen eines elektronischen Geräts ermöglichen, wenn der Tisch in eine Ruheposition gebracht ist.

In besonders vorteilhafter Weise ist die Tischplatte mindestens um etwa 180° um eine im Wesentlichen horizontale Achse drehbar gelagert. Die Tischplatte ist somit derart drehbar, dass eine Oberseite der Tischplatte nach unten gedreht werden kann und eine Unterseite der Tischplatte zur Ablage von Gegenständen genutzt werden kann. Bei der Benutzung des Tischs kann somit zwischen der ersten und der zweiten Seite der Tischplatte gewechselt werden.

Vorzugsweise ist der Tisch mittels mindestens eines Gelenks schwenkbar und die Tischplatte zusätzlich mittels mindestens eines weiteren Gelenks dreh- und/oder kippbar. Der Tisch kann beispielsweise ausklappbar an einer Rückenlehne eines Fahrzeugsitzes befestigt sowie in seiner Neigung einstellbar sein, wobei zusätzlich die Tischplatte um 180° drehbar sein kann. Der Tisch kann aber auch aus einer Armlehne des Fahrzeugsitzes oder aus einer Verkleidung der Kabine des Fahrzeugs herausklappbar sein. Durch die Klapp- bzw. Schwenkbewegung kann der Tisch aus einer Ruheposition in eine Gebrauchsposition gebracht werden und umgekehrt. Durch die Drehbewegung um 180° kann bei der Benutzung des Tischs zwischen der Ober- und der Unterseite gewechselt werden. Hierdurch kann eine platzsparende Anordnung sowie eine bequeme Benutzung des Tischs ermöglicht werden. Die mindestens eine erste Energieübertragungseinrichtung ist vorzugsweise über elektrische Leitungen, die durch das mindestens eine Gelenk sowie ggf. weitere Gelenke verlaufen, mit dem Bordnetz des Fahrzeugs verbunden. Sofern eine Steuerungseinrichtung der ersten Energieübertragungseinrichtung ebenfalls in den Tisch integriert ist, ist die Steuerungseinrichtung über durch das bzw. die Gelenke verlaufende elektrische Leitungen mit dem Bordnetz verbunden; die Steuerungseinrichtung kann zur Erzeugung des zum Betrieb der Energieübertragungseinrichtung notwendigen elektrischen Stroms bzw. der elektrischen Spannung aus dem Bordnetz des Fahrzeugs ausgebildet sein. Das Gleiche gilt ggf. für weitere Energieübertragungseinrichtungen.

In vorteilhafter Weise kann am Tisch oder an dem Sitz, dem der Tisch zugeordnet ist, eine Anzeige angeordnet sein, die beispielsweise den Status der mindestens einen ersten sowie ggf. weiterer Energieübertragungseinrichtungen anzeigt. Vorzugsweise ist die Anzeige mit LEDs oder als Display ausgebildet. Sofern die Tischplatte um 180° drehbar ist, kann jeweils auf beiden Seiten eine Anzeige vorgesehen sein oder die Anzeige kann in einer transparenten Aussparung der Tischplatte angeordnet sein, um diese von beiden Seiten der Tischplatte erkennbar zu machen; ebenso können Bedienelemente auf beiden Seiten der Tischplatte angeordnet sein.

Eine erfindungsgemäße Temperierungsvorrichtung für Speisen umfasst eine Energieempfangseinrichtung zum Zusammenwirken mit einer drahtlosen Energieübertragungseinrichtung, nämlich mit einer wie oben beschriebenen ausgebildeten ersten Energieübertragungseinrichtung eines erfindungsgemäßen Tischs. Die Energieempfangseinrichtung ist zur Versorgung einer Aufnahme für Speisen mit Energie zur Temperierung der Speisen ausgebildet. Die Energie, mit der die Aufnahme versorgt wird, wird durch die Energieempfangseinrichtung von der drahtlosen Energieübertragungseinrichtung empfangen. Die Temperierungsvorrichtung kann als Warmhalteteller ausgebildet sein und die Aufnahme für Speisen umfassen. Die Temperierungsvorrichtung kann aber beispielsweise auch als Warmhalteplatte ausgebildet sein, wobei eine auf die Warmhalteplatte aufgestellte Aufnahme, etwa ein Teller, von dieser erwärmt wird. Die Temperierungsvorrichtung kann beispielsweise auch als Kühlvorrichtung ausgebildet sein, wobei die Energieempfangseinrichtung die elektrische Energie zum Betrieb der Kühlvorrichtung bereitstellt. Vorzugsweise ist die Temperierungsvorrichtung, insbesondere wenn diese als Warmhalteteller ausgebildet ist, für die Reinigung in einer Spülmaschine geeignet.

Die Temperierungsvorrichtung kann einen RFID-Transponder umfassen, auf dem Daten der Temperierungsvorrichtung, beispielsweise Identifikationsdaten und/oder Eigenschaften wie etwa eine Leistungsaufnahme, gespeichert werden können; ebenso können Daten von Speisen, die mit der beispielsweise als Warmhalteteller ausgebildeten Temperierungsvorrichtung serviert werden, gespeichert werden. Die genannten Daten können von einem RFID-Lesegerät des Tischs ausgelesen und zur Steuerung der ersten Energieübertragungseinrichtung, zur Anzeige und/oder zur Auswertung durch ein übergeordnetes Steuerungssystem verwendet werden. In entsprechender Weise kann die Temperierungsvorrichtung zur Speicherung und Übertragung der genannten Daten mittels einer anderen Nahfeldkommunikationseinrichtung oder ggf. mittels induktiver Kopplung ausgebildet sein.

Die Energieempfangseinrichtung kann beispielsweise eine oder mehrere Spulen umfassen, die zum Zusammenwirken mit einer induktiv wirkenden Energieübertragungseinrichtung, etwa gemäß dem oben genannten Standard, ausgebildet sind. Die von den Spulen aufgenommene elektrische Energie wird zum Betreiben der Temperierungsvorrichtung verwendet, etwa zum Erwärmen der Speisen mittels elektrischen Heizelementen. Zur Steuerung der Energieempfangseinrichtung sowie ggf. zur Datenspeicherung und Datenübertragung an die Energieübertragungseinrichtung mittels induktiver Kopplung umfasst die Temperierungsvorrichtung eine elektronische Steuerungseinrichtung. Die Temperierungsvorrichtung kann zur Regelung der Temperatur von Speisen weiterhin einen Temperatursensor aufweisen, dessen Signal von der elektronischen Steuerungseinrichtung der Temperierungsvorrichtung ausgewertet wird. Dabei kann eine Heizleistung durch die Steuerungseinrichtung der Temperierungsvorrichtung eingestellt werden oder durch entsprechende Einstellung der Leistung der Energieübertragungseinrichtung bestimmt werden. Hierdurch kann die Wirkung der Temperierungsvorrichtung beispielsweise zum längeren Warmhalten von Speisen verbessert werden.

Alternativ kann die Energieempfangseinrichtung als metallischer Boden der Temperierungsvorrichtung ausgebildet sein, mit dem diese auf die Oberseite des Tischs gestellt werden kann, wobei der metallische Boden unmittelbar auf der Oberfläche des Tischs aufliegen kann oder durch eine vorzugsweise nichtmetallische Isolierschicht von diesem getrennt ist. Hierbei erfolgt eine Erwärmung des metallischen Bodens durch Wirbelströme, die durch eine induktiv wirkende Energieübertragungseinrichtung des Tischs erzeugt werden. Die erzeugte Wärme kann direkt zur Erwärmung der Speisen genutzt werden. Um eine Identifikation der Temperierungsvorrichtung durch eine entsprechend eingerichtete Steuerungseinrichtung und eine dementsprechende sowie ggf. eine an die servierten Speisen angepasste Ansteuerung der mindestens einen ersten Energieübertragungseinrichtung zu ermöglichen, weist die Temperierungsvorrichtung einen RFID-Transponder auf, der Identifizierungsdaten der Temperierungsvorrichtung sowie beispielsweise Informationen über die mit in der Aufnahme servierten Speisen zum Auslesen bereitstellt. Diese Ausführungsform der Temperierungsvorrichtung ist besonders einfach aufgebaut und kostengünstig herstellbar.

Ein erfindungsgemäßes Speisentemperierungssystem für eine Kabine eines Fahrzeugs umfasst einen wie oben beschrieben ausgebildeten Tisch und eine wie zuvor beschrieben ausgebildete Temperierungsvorrichtung für Speisen. Die Temperierungsvorrichtung ist zum Zusammenwirken mit dem Tisch ausgebildet, insbesondere ist die Energieempfangseinrichtung der Temperierungsvorrichtung zum Zusammenwirken mit der mindestens einen ersten drahtlosen Energieübertragungseinrichtung des Tischs ausgebildet, um die Übertragung von Energie zur Versorgung einer Aufnahme für Speisen zum Temperieren der Speisen zu ermöglichen. Weiterhin kann die Temperierungsvorrichtung derart an den Tisch angepasst sein, dass die Temperierungsvorrichtung unterseitig einen Vorsprung und der Tisch an seiner Oberseite eine Vertiefung aufweist, wobei durch Einsetzen des Vorsprungs in die Vertiefung eine Sollposition der Temperierungsvorrichtung erreicht werden kann, die eine optimale Energieübertragung ermöglicht. Ferner kann die Temperierungsvorrichtung einen Speicher, etwa einen RIFD-Tag, zur Speicherung von Daten der Temperierungsvorrichtung und/oder Daten der mit der Temperierungsvorrichtung servierten Speisen umfassen, und der Tisch kann zur Erfassung der gespeicherten Daten, beispielsweise mittels eines RFID-Lesegeräts, und zur entsprechenden Ansteuerung der Energieübertragungseinrichtung ausgebildet sein.

Gemäß einem erfindungsgemäßen Verfahren zum Temperieren von Speisen in einer Kabine eines Fahrzeugs wird eine Temperierungsvorrichtung für Speisen bereitgestellt, die eine Energieempfangseinrichtung umfasst. Die Temperierungsvorrichtung kann eine Aufnahme für die zu temperierenden Speisen umfassen und beispielsweise als Warmhalteteller ausgebildet sein oder auch etwa eine Warmhalteplatte sein, auf die eine solche Aufnahme, etwa ein Teller, zum Erwärmen aufgestellt werden kann; vorzugsweise ist die Temperierungseinrichtung wie oben beschrieben ausgebildet. Weiter werden die zu temperierenden Speisen in die Aufnahme für Speisen eingebracht und die Temperierungsvorrichtung mit der Aufnahme auf einem Tisch der Fahrzeugkabine angeordnet; diese beiden Schritte können auch in umgekehrter Reihenfolge stattfinden. Der Tisch umfasst eine Tischplatte sowie mindestens eine in die Tischplatte integrierte erste Energieübertragungseinrichtung, die zur drahtlosen, insbesondere induktiven Energieübertragung und zum Zusammenwirken mit der Energieempfangseinrichtung der Temperierungsvorrichtung ausgebildet ist; vorzugsweise ist der Tisch wie oben beschrieben ausgebildet. Die mindestens eine Energieübertragungseinrichtung wird schließlich zur Übertragung von Energie an die Energieempfangseinrichtung zur Versorgung der Aufnahme mit Energie zur Temperierung der Speisen betrieben. Dabei kann es in vorteilhafter Weise vorgesehen sein, dass erfasst wird, ob sich die Temperierungsvorrichtung an oder nahe an einer Sollposition auf der Oberseite des Tischs befindet, in der die mindestens eine Energieübertragungseinrichtung und die Energieempfangseinrichtung einander gegenüber liegen, und dass die mindestens eine erste Energieübertragungseinrichtung nur dann zur Übertragung von Energie an die Energieempfangseinrichtung betrieben wird, wenn dies der Fall ist. Weiter kann es in vorteilhafter Weise vorgesehen sein, dass in einem Speicher der Temperierungsvorrichtung gespeicherte Daten, die beispielsweise Daten der Temperierungsvorrichtung oder der in der Aufnahme angeordneten Speisen sein können, erfasst und zur entsprechenden Ansteuerung der Energieübertragungseinrichtung genutzt werden, etwa zum Halten einer von der Art der Speisen abhängigen Temperatur der Aufnahme. Durch das erfindungsgemäße Verfahren kann auf einfache Weise eine Temperierung von in der Fahrzeugkabine servierten Speisen erreicht werden, ohne die Nutzbarkeit des Tischs für andere Zwecke, etwa als Ablage, einzuschränken.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Weitere Aspekte der Erfindung ergeben sich aus der nachfolgenden Beschreibung bevorzugter Ausführungsbeispiele und der beigefügten Zeichnung. Es zeigen, jeweils in einer Schrägansicht:
Fig. 1 ein Ausführungsbeispiel eines erfindungsgemäßen Tischs;
Fig. 2 den Tisch gemäß Fig. 1 teilweise aufgeschnitten;
Fig. 3 eine in den Tisch gemäß Fig. 2 integrierte Energieübertragungseinrichtung mit zugehöriger Steuerungseinrichtung in vergrößerter Darstellung;
Fig. 4 eine weitere in den Tisch gemäß Fig. 2 integrierte Energieübertragungseinrichtung mit zugehöriger Steuerungseinrichtung in vergrößerter Darstellung;
Fig. 5 den Tisch gemäß Fig. 1 mit einem darauf abgestellten Warmhalteteller und einem darauf abgelegten Smartphone;
Fig. 6 einen Warmhalteteller gemäß einem Ausführungsbeispiel der Erfindung, teilweise aufgeschnitten schräg von oben gesehen;
Fig. 7 den Warmhalteteller gemäß Fig. 6, teilweise aufgeschnitten schräg von unten gesehen;
Fig. 8 den Tisch gemäß Fig. 1 mit einem darauf abgelegten Smartphone in gekippter Stellung;
Fig. 9 den Tisch gemäß Fig. 1 mit einem daran gehaltenen Smartphone in gedrehter Stellung;
Fig. 10 einen Tisch gemäß einer weiteren Ausführungsform der Erfindung mit einem in ein Einlegefach des Tischs eingelegten Smartphone.

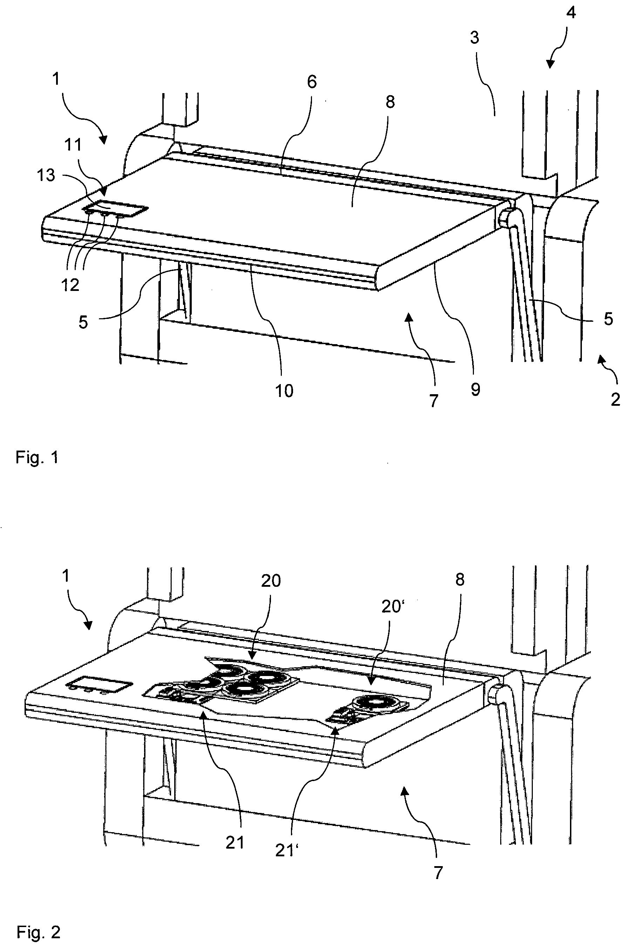

In Fig. 1 ist ein Tisch gemäß einer Ausführungsform der Erfindung dargestellt. Der Tisch 1 ist an einem in Fig. 1 angedeuteten Sitz 2 eines Fahrzeugs angebracht. Der Sitz 2 ist beispielsweise ein Fluggastsitz in einer Passagierkabine eines Luftfahrzeugs. Der Tisch 1 ist als Klapptisch ausgebildet, der zwischen einer Ruheposition, in der der Tisch 1 in eine rückseitige Ausnehmung 3 an der Rückenlehne 4 des Sitzes 2 hochgeklappt ist, und einer Gebrauchsposition, in der der Tisch 1 zur Ablage von Gegenständen für einen Passagier, der auf einem nicht dargestellten weiteren Sitz des Fahrzeugs sitzt, zur Verfügung steht, geschwenkt werden kann. Hierfür ist der Tisch 2 an zwei Armen 5 um eine horizontale Achse schwenkbar gehalten; die Arme 5 sind ebenfalls jeweils um eine hierzu parallele horizontale Achse schwenkbar, um den Tisch 1 in eine bequemere Gebrauchsposition zu bringen.

Der Tisch 1 umfasst einen als Querbalken ausgebildeten Träger 6, der schwenkbar an den Armen 5 gelagert ist, und eine an dem Träger 6 gehaltene, zum Passagier gerichtete Tischplatte 7. Die Tischplatte 7 weist eine Oberseite 8 und eine Unterseite 9 auf. Nahe an der zum Passagier weisenden Kante 10 der Tischplatte 7 ist ein Kontrollfeld 11 angeordnet, das Bedienelemente 12 und eine Anzeige 13 umfasst. Die Tischplatte 7 kann einen in den Figuren nicht dargestellten Rand aufweisen, der ein Abgleiten von Gegenständen von der Tischplatte 7 verhindert.

In Fig. 2 ist der in Fig. 1 dargestellte Tisch 1 teilweise aufgeschnitten gezeigt, so dass die in die Tischplatte 7 integrierten Energieübertragungseinrichtungen 20, 20' erkennbar sind. Die Energieübertragungseinrichtungen 20, 20' sind zur induktiven Energieübertragung an auf der Oberseite 8 der Tischplatte 7 befindliche Geräte dicht unter der Oberseite 8 der Tischplatte 7 angeordnet. Die Energieübertragungseinrichtungen 20, 20' unterscheiden sich hinsichtlich der von ihnen eingenommenen Fläche und der übertragbaren Leistung. Die Leitungen, über die die Steuerungseinrichtungen 21, 21' mit einem Bordnetz des Fahrzeugs verbunden ist, sind in Fig. 2 nicht dargestellt.

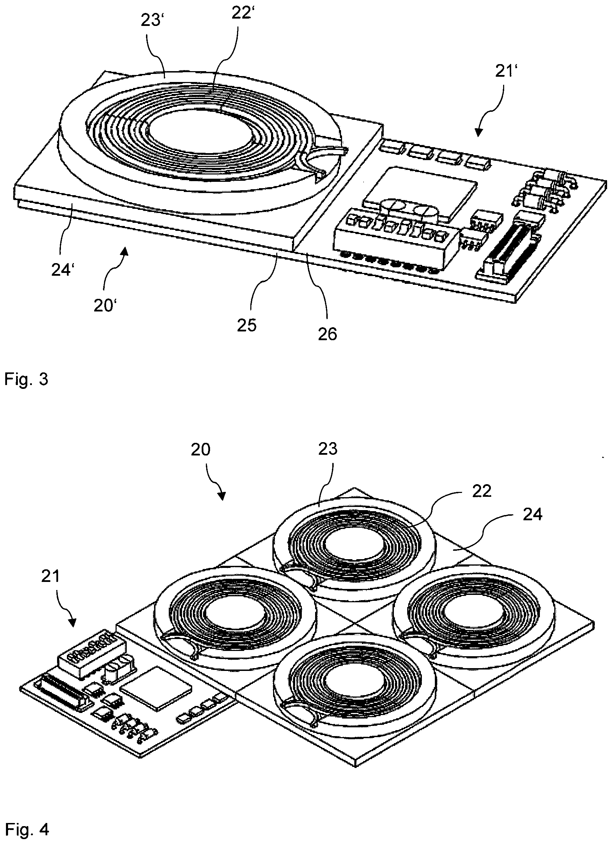

Die Energieübertragungseinrichtungen 20, 20' sowie die jeweils zugehörigen Steuerungseinrichtungen 21, 21', die ebenfalls in die Tischplatte 7 integriert sind, sind in den Figuren 3 und 4 vergrößert dargestellt. Im Folgenden wird der Einfachheit halber diejenige Energieübertragungseinrichtung 20', die die geringere Fläche und die geringere übertragbare Leistung aufweist, zuerst beschrieben.

Die Energieübertragungseinrichtung 20' umfasst eine Spule 22', die in eine Abschirmung 23' eingebettet ist. Die Abschirmung 23' ist in Form eines flachen Topfs aus Ferrit mit einer zusätzlichen Kapselung mit Mu-Metall ausgebildet, der nach oben, d.h. zur Oberseite 8 der Tischplatte 7 (s. Fig. 2) hin, offen ist. Die Abschirmung 23' schirmt somit die Spule 22' nach unten und seitlich ab. Zusätzlich ist unterhalb der Abschirmung 23' eine Platte 24' aus Aluminium angeordnet, um etwaige Restmagnetfelder durch Wirbelströme zu eliminieren. Neben der Energieübertragungseinrichtung 20' ist die Steuerungseinrichtung 21' angeordnet, die elektronische Bauelemente und Prozessoren umfasst. Die Steuerungseinrichtung 21' ist zur Erzeugung des für eine induktive Energieübertragung notwendigen elektrischen Stroms in der Spule 22' sowie zur funktionsgerechten Steuerung des Stroms eingerichtet und umfasst elektronische Bauelemente, insbesondere einen Mikroprozessor. Die Energieübertragungseinrichtung 20' und die Steuerungseinrichtung 21' sind auf einer gemeinsamen Trägerplatine 25 angeordnet, die zur Abschirmung etwaiger elektrischer Felder oberseitig mit einer als Massefläche wirkenden Kupferschicht 26 versehen ist. Die Verbindungsleitungen zwischen der Energieübertragungseinrichtung 20' und der Steuerungseinrichtung 21' sind in Fig. 3 nicht dargestellt.

Diejenige Energieübertragungseinrichtung 20, die die größere Fläche und die höhere übertragbare Leistung aufweist, ist in Fig. 4 gezeigt. Diese Energieübertragungseinrichtung 20 umfasst vier nebeneinander angeordnete Spulen 22, die in entsprechender Weise wie in Fig. 3 dargestellt jeweils in eine Abschirmung 23 aus Ferrit mit Mu-Metall eingebettet und auf einer Platte 24 aus Aluminium angeordnet sind. Die zugeordnete Steuerungseinrichtung 21 ist zur Ansteuerung der vier Spulen 22 ausgebildet. Im Übrigen ist die Energieübertragungseinrichtung 20 wie die zuvor beschriebene Energieübertragungseinrichtung 20' ausgebildet.

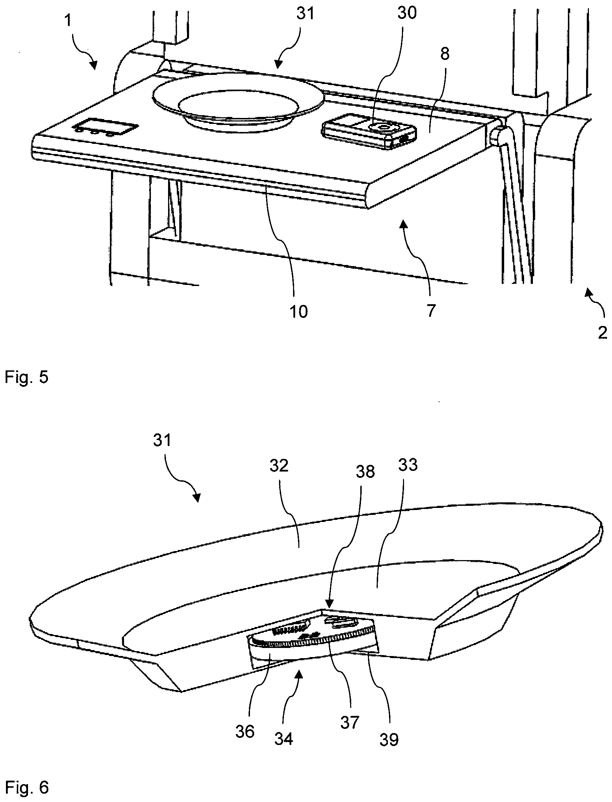

In der in den Figuren 1 und 2 gezeigten Gebrauchsposition ist der Tisch 1 zur Ablage von Gegenständen geeignet. In Fig. 5 sind beispielhaft ein Smartphone 30 und ein Warmhalteteller 31 gezeigt, die auf der Oberseite 8 der Tischplatte angeordnet sind. Dabei ist das Smartphone 30 über der Energieübertragungseinrichtung 20' mit der geringeren Fläche und der geringeren Leistung und der Warmhalteteller 31 über der Energieübertragungseinrichtung 20 mit der größeren Fläche und der höheren übertragbaren Leistung angeordnet.

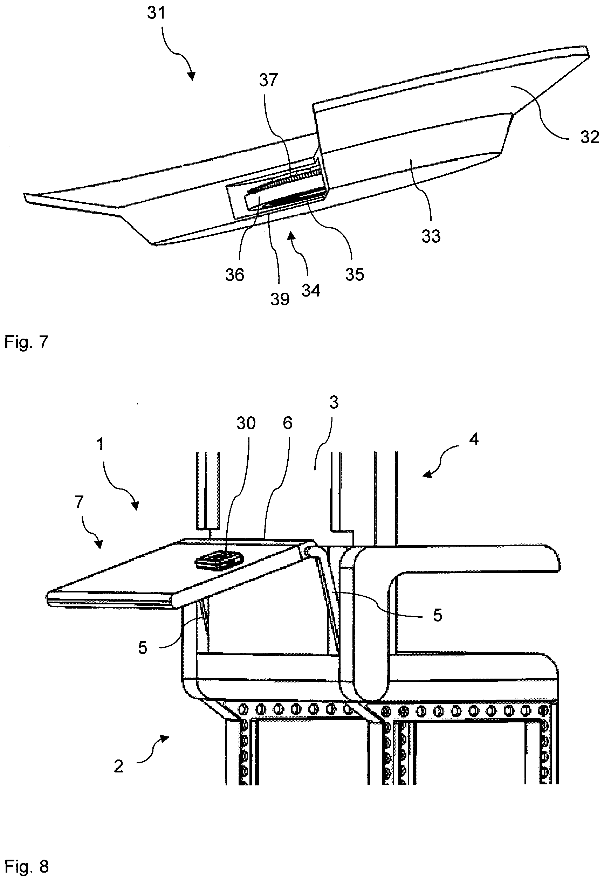

Wie in Fig. 6 und 7 gezeigt ist, weist der Warmhalteteller 31 zur Aufnahme von zu temperierenden Speisen einen erhöhten Rand 32 und einen Boden 33 auf. In den Boden 33 ist eine Energieempfangseinrichtung 34 integriert, die eine in Fig. 7 erkennbare Empfangsspule 35 umfasst, die seitlich von einer ringförmigen Abschirmung 36 umschlossen ist. Auf der Oberseite der Empfangsspule 35 ist eine Platine 37 angeordnet, die Bauelemente einer elektronische Steuerungseinrichtung 38 des Warmhaltetellers 31 trägt (s. Fig. 6). Der Warmhalteteller 31 umfasst eine oder mehrere elektrische Heizelemente, die mit der von der Empfangsspule empfangenen elektrischen Energie betrieben werden können (nicht dargestellt). Zur Regelung der Temperatur von Speisen ist im oberen Bereich des Bodens 33 ein in Fig. 6 nicht dargestellter Temperatursensor vorhanden, dessen Signal von der elektronischen Steuerungseinrichtung 38 ausgewertet und zur Regelung der Temperatur des Warmhaltetellers 31 genutzt wird; dabei kann die Einstellung der Heizleistung der elektrischen Heizelemente durch die Steuerungseinrichtung 38 des Warmhaltetellers 31 erfolgen oder durch entsprechende Ansteuerung der ersten Energieübertragungseinrichtung 20. Die Energieempfangseinrichtung 34 und die elektronische Steuerungseinrichtung 38 sind hermetisch dicht in den Warmhalteteller 31 eingeschlossen, so dass dieser spülmaschinengeeignet ist. Eine vorzugsweise nichtmetallische Abdeckung 39, die integral mit dem Boden 33 ausgebildet ist und einen Hohlraum, in dem die Energieempfangseinrichtung 34 und die Steuerungseinrichtung 38 aufgenommen sind, unterseitig dicht abschließt, dient zugleich als Isolationsschicht, um eine übermäßige Erwärmung der Unterseite des Bodens 33 und der Oberseite des Tischs 1, wenn der Warmhalteteller 31 auf diesem betrieben wird, zu vermeiden.

Das Smartphone 30 weist in an sich bekannter Weise eine Ladeeinrichtung zum induktiven Aufladen auf. Wenn das Smartphone 30 wie in Fig. 5 gezeigt auf der Oberseite 8 der Tischplatte 7 aufliegt, kann es daher mittels der Energieübertragungseinrichtung 20' geladen werden. Hierfür kann die Energieübertragungseinrichtung 20' in an sich bekannter Weise ausgebildet sein, beispielsweise gemäß dem oben genannten Standard.

In entsprechender Weise kann elektrische Energie an die Empfangsspule 35 des Warmhaltetellers 31 übertragen werden, wenn dieser wie in Fig. 5 gezeigt auf der Oberseite 8 der Tischplatte 7 steht. In dieser Position bedeckt der Warmhalteteller 31 denjenigen Teil der Fläche der Oberseite 8 der Tischplatte 7, der von den unterhalb der Oberseite 8 angeordneten Spulen 22 der Energieübertragungseinrichtung 20 eingenommen wird. In dieser Position, die hier auch als Sollposition bezeichnet wird, wirken praktisch keine von den Spulen 22 erzeugten Magnetfelder außerhalb des Warmhaltetellers 31. Selbst dann, wenn metallische Gegenstände wie etwa Schlüssel oder Münzen neben dem Warmhalteteller 31 auf der Tischplatte 7 liegen, werden diese daher nicht durch Wirbelströme erwärmt, wogegen die Energieübertragung zum Warmhalteteller 31 optimal ist. Die Sollposition des Warmhaltetellers 31 kann beispielsweise durch eine farbliche Markierung auf der Oberseite 8 der Tischplatte 7 oder durch eine Vertiefung in der Oberseite 8, in die bei Erreichen der Sollposition ein entsprechender Vorsprung an der Unterseite des Warmhaltetellers 31 eingreift, markiert sein (in den Figuren nicht dargestellt). Hierdurch kann dann, wenn der Warmhalteteller 31 eine nicht-kreisförmige Fläche hat, also beispielsweise rechteckig oder länglich ausgebildet ist, auch eine solche Ausrichtung des Warmhaltetellers 31 erleichtert werden, dass dieser eine entsprechende Anordnung der Spulen 22 überdeckt. In entsprechender Weise kann eine Sollposition für das Smartphone 30, in der dieses oberhalb der Spule 22' der Energieübertragungseinrichtung 20' angeordnet ist, markiert sein; aufgrund der geringeren von der Energieübertragungsanordnung 20' übertragbaren Leistung ist die Gefahr einer unerwünschten Erwärmung anderer auf der Tischplatte 7 abgelegter Gegenstände hierbei geringer.

Die Steuerungseinrichtungen 21, 21' der Energieübertragungseinrichtungen 20, 20' können dazu ausgebildet sein, durch Erfassung einer induktiven Kopplung zwischen der Spulen 22' und einer Empfangsspule des Smartphones 30 bzw. zwischen den Spulen 22 und der Empfangsspule 35 des Warmhaltetellers 31 die Erreichung der Sollposition zu erfassen und in diesem Fall die Aktivierung der jeweiligen Energieübertragungseinrichtung 20' bzw. 20 zu ermöglichen. Es kann auch vorgesehen sein, dass durch Betätigen eines Bedienelements 12 (s. Fig. 1), etwa durch Drücken eines Tasters, alle Energieübertragungseinrichtungen 20, 20' des Tischs 1 gestartet werden können, jedoch nach kurzer Zeit automatisch diejenigen der Energieübertragungseinrichtungen 20, 20' wieder abgeschaltet werden, bei denen keine Energieabnahme durch eine darüber angeordnete, geeignet ausgebildete Energieempfangseinrichtung erfolgt. Ferner sind die Energieübertragungseinrichtungen 20, 20' dazu eingerichtet, über die induktive Kopplung zwischen den jeweiligen Spulen Daten zu übertragen, die eine optimale Energieübertragung ermöglichen. Die Datenübertragung kann beispielsweise gemäß dem oben genannten Standard erfolgen.

Das Smartphone 30 ist hier lediglich beispielhaft erwähnt worden; in gleicher Weise können andere elektronische Geräte, wie etwa Mobiltelefone oder Tablet-PCs, gehalten und geladen werden. Anstelle des Warmhaltetellers 31 kann beispielsweise eine Warmhalteplatte vorgesehen sein, auf die ein Teller aufgestellt werden kann, der durch Wärmeleitung von einer erwärmten Oberseite der Warmhalteplatte erwärmt wird. Ferner kann anstelle der Warmhalteplatte 31 ein elektronisches Gerät mit einer entsprechenden höheren Leistungsaufnahme als das Smartphone 30 betrieben oder geladen werden.

In Fig. 8 ist gezeigt, dass der Tisch 1 gekippt werden kann, um eine für eine bequemere Nutzung geeignete Neigung der Tischplatte 7 einzustellen, beispielsweise um einen günstigeren Betrachtungswinkel für ein Display eines auf der Tischplatte 7 angeordneten elektronischen Geräts, etwa eines Smartphones 30, zu erreichen. Hierfür kann der Träger 6 in Bezug zu den Armen 5, zusätzlich zur Klappbarkeit in die Ruheposition, in der die Tischplatte 7 nach oben in die Ausnehmung 3 an der Rückseite der Rückenlehne 4 geklappt ist, in einer Mehrzahl von Drehpositionen festlegbar sein, beispielsweise durch Rastung. Das Smartphone 30 kann dabei durch eine nicht dargestellte Haltevorrichtung, etwa mittels eines Riegels, eines Netzes oder mittels Permanentmagneten, an der Tischplatte 7 gehalten werden.

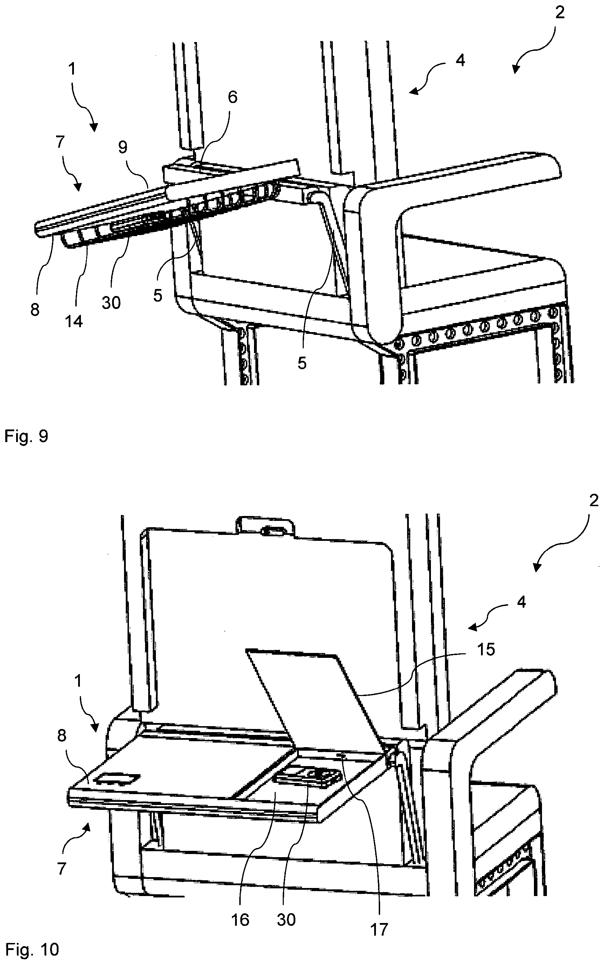

Wie in Fig. 9 dargestellt, ist die Tischplatte 7 drehbar an dem Träger 6 angeordnet. Die Tischplatte 7 ist hierfür um eine Drehachse drehbar gelagert, die im Wesentlichen horizontal angeordnet ist bzw. gemäß Fig. 8 geneigt sein kann und die auf den Passagier, dem der Tisch 1 zugeordnet ist, gerichtet ist. Die drehbare Lagerung kann mit Reibung oder einer Rastung ausgestattet sein, um die Tischplatte 7 in einer gewünschten Drehposition zu halten. Die Tischplatte 7 ist um mindestens 180° drehbar, so dass die Tischplatte 7 in eine Lage gebracht werden kann, in der die Oberseite 8 der Tischplatte 7 nach unten und die Unterseite 9 nach oben weist. Um ein auf die Oberseite 8 aufgelegtes elektronisches Gerät, etwa ein Smartphone 30, an dieser zu halten und auch bei einem derart umgeklappten Tisch ein weiteres Aufladen zu ermöglichen, kann dieses durch eine Haltevorrichtung, die in Fig. 9 exemplarisch als engmaschiges Netz 14 dargestellt ist, gehalten werden. Die plane Unterseite 9 der Tischplatte 7 kann in einer Position, in der die Tischplatte vollständig umgeklappt ist, ohne Einschränkungen als Ablage genutzt werden. Es können auch weitere, in den Figuren nicht dargestellte Energieübertragungseinrichtungen in der Tischplatte 7 aufgenommen sein, die zur Unterseite 9 gerichtet sind und eine Energieübertragung an elektronische Geräte, die auf der Unterseite 9 angeordnet sind, ermöglichen können.

Bei der in Fig. 10 dargestellten Ausfuhrungsform der Erfindung weist die Tischplatte 7 ein mit einem Deckel 15 verschließbares Einlegefach 16 auf, in das ein elektronisches Gerät, etwa ein Smartphone 30, eingelegt und darin gehalten werden kann. Der Deckel 15 schließt, wenn er geschlossen ist, plan mit der Oberseite 8 der Tischplatte 7 ab. Innerhalb des Einlegefachs 16 sind Anschlüsse für eine drahtgebundene Verbindung des elektronischen Geräts mit dem Tisch 1 und mit einem Bordnetz des Fahrzeugs vorhanden, etwa ein USB-Anschluss 17 zum Aufladen eines in das Einlegefach 16 eingelegten Smartphones 30.

Der Übersichtlichkeit halber sind nicht in allen Figuren alle Bezugszeichen dargestellt. Zu einer Figur nicht erläuterte Bezugszeichen haben die gleiche Bedeutung wie in den übrigen Figuren.

### Bezugszeichenliste

- 1: Tisch
- 2: Sitz
- 3: Ausnehmung
- 4: Rückenlehne
- 5: Arm
- 6: Träger
- 7: Tischplatte
- 8: Oberseite
- 9: Unterseite
- 10: Kante
- 11: Kontrollfeld
- 12: Bedienelemente
- 13: Anzeige
- 14: Netz
- 15: Deckel
- 16: Einlegefach
- 17: USB-Anschluss
- 20, 20': Energieübertragungseinrichtung
- 21, 21': Steuerungseinrichtung
- 22, 22': Spule
- 23, 23': Abschirmung
- 24, 24': Platte
- 25: Trägerplatine
- 26: Kupferschicht
- 30: Smartphone
- 31: Warmhalteteller
- 32: Rand
- 33: Boden
- 34: Energieempfangseinrichtung
- 35: Empfangsspule
- 36: Abschirmung
- 37: Platine
- 38: Steuerungseinrichtung
- 39: Abdeckung

## Patentansprüche

1. Tisch für eine Kabine eines Fahrzeugs, der eine Tischplatte (7) und mindestens eine erste Energieübertragungseinrichtung (20) umfasst, **dadurch gekennzeichnet, dass** die mindestens eine erste Energieübertragungseinrichtung (20) in die Tischplatte (7) integriert ist und zur drahtlosen Energieversorgung einer Temperierungsvorrichtung für Speisen ausgebildet ist.

2. Tisch nach Anspruch 1, **dadurch gekennzeichnet, dass** der mindestens einen ersten Energieübertragungseinrichtung (20) eine elektronische Steuerungseinrichtung (21) zugeordnet ist, die derart eingerichtet ist, dass eine Energieversorgung der Temperierungsvorrichtung nur dann erfolgt, wenn die Temperierungsvorrichtung zumindest näherungsweise an einer Sollposition angeordnet ist.

3. Tisch nach einem der vorhergehenden Ansprüche, **dadurch gekennzeichnet, dass** der Tisch (1) eine Nahfeldkommunikationseinrichtung aufweist.

4. Tisch nach einem der vorhergehenden Ansprüche, **dadurch gekennzeichnet, dass** die mindestens eine erste Energieübertragungseinrichtung (20) mindestens eine Spule (22) zur induktiven Energieübertragung umfasst, die an einer Seite der Tischplatte (7) angeordnet und zumindest zu einer anderen Seite der Tischplatte (7) hin abgeschirmt ist.

5. Tisch nach einem der vorhergehenden Ansprüche, **dadurch gekennzeichnet, dass** eine Arbeitsfrequenz der mindestens einen ersten Energieübertragungseinrichtung (20) weniger als 150 kHz, vorzugsweise 0,8 bis 150 kHz, besonders bevorzugt 70 kHz beträgt.

6. Tisch nach einem der vorhergehenden Ansprüche, **dadurch gekennzeichnet, dass** die mindestens eine erste Energieübertragungseinrichtung (20) mit einem von einem Benutzer des Tischs (1) bedienbaren Schalter und/oder durch ein übergeordnetes Steuerungssystem des Fahrzeugs aktivierbar und/oder deaktivierbar ist.

7. Tisch nach einem der vorhergehenden Ansprüche, **dadurch gekennzeichnet, dass** der Tisch (1) mindestens eine zweite Energieübertragungseinrichtung (20') umfasst, wobei die mindestens eine zweite Energieübertragungseinrichtung (20') zum drahtlosen Laden eines elektronischen Geräts ausgebildet ist.

8. Tisch nach Anspruch 7, **dadurch gekennzeichnet, dass** die mindestens eine zweite Energieübertragungseinrichtung (20') zur Datenübertragung zwischen einem elektronischen Gerät und einem übergeordneten Datennetz ausgebildet ist.

9. Tisch nach Anspruch 7 oder 8, **dadurch gekennzeichnet, dass** die Tischplatte (7) eine erste und eine dieser gegenüberliegende zweite Seite aufweist, wobei die mindestens eine erste Energieübertragungseinrichtung (20) an der ersten Seite und die mindestens eine zweite Energieübertragungseinrichtung (20') an der zweiten Seite angeordnet ist.

10. Tisch nach einem der Ansprüche 7 bis 9, **dadurch gekennzeichnet, dass** die erste und/oder die zweite Seite der Tischplatte (7) mit einer Halteeinrichtung zum Halten des elektronischen Geräts versehen ist.

11. Tisch nach einem der vorhergehenden Ansprüche, **dadurch gekennzeichnet, dass** die Tischplatte (7) um 180° um eine horizontale Achse drehbar gelagert ist.

12. Tisch nach einem der vorhergehenden Ansprüche, **dadurch gekennzeichnet, dass** der Tisch mittels mindestens eines Gelenks dreh- oder schwenkbar ist, wobei die mindestens eine erste Energieübertragungseinrichtung (20) über durch das mindestens eine Gelenk verlaufende Kabel mit einem Bordnetz des Fahrzeugs verbindbar ist.

13. Temperierungsvorrichtung für Speisen, umfassend eine Energieempfangseinrichtung (34) zum Zusammenwirken mit einer ersten Energieübertragungseinrichtung (20) eines Tischs gemäß einem der Ansprüche 1 bis 12, wobei die Energieempfangseinrichtung (34) zur Versorgung einer Aufnahme für Speisen mit Energie zur Temperierung der Speisen ausgebildet ist.

14. Temperierungsvorrichtung nach Anspruch 13, **dadurch gekennzeichnet, dass** die Energieempfangseinrichtung (34) mindestens eine Empfangsspule (35) und eine elektronische Steuerungseinrichtung umfasst.

15. Temperierungsvorrichtung nach Anspruch 13, **dadurch gekennzeichnet, dass** die Energieempfangseinrichtung (34) als metallischer Boden der Temperierungsvorrichtung ausgebildet ist und dass die Temperierungsvorrichtung einen RFID-Transponder umfasst.

16. Speisentemperierungssystem für eine Kabine eines Fahrzeugs, umfassend einen Tisch nach einem der Ansprüche 1 bis 12 und eine Temperierungsvorrichtung nach einem der Ansprüche 13 bis 15.

17. Verfahren zum Temperieren von Speisen in einer Kabine eines Fahrzeugs, wobei eine Temperierungsvorrichtung für Speisen bereitgestellt wird, die eine Energieempfangseinrichtung (34) umfasst, zu temperierende Speisen in einer Aufnahme für Speisen angeordnet werden, die Temperierungsvorrichtung mit der Aufnahme auf einem Tisch angeordnet wird, der eine Tischplatte (7) und mindestens eine in die Tischplatte (7) integrierte erste Energieübertragungseinrichtung (20) zur drahtlosen Energieübertragung umfasst, und die mindestens eine erste Energieübertragungseinrichtung (20) zur Übertragung von Energie an die Energieempfangseinrichtung (34) zur Versorgung der Aufnahme mit Energie zur Temperierung der Speisen betrieben wird.

## Claims

1. Table for a cabin of a vehicle, the table comprising a table top (7) and at least one first energy transmission device (20), **characterized in that** the at least one first energy transmission device (20) is integrated in the table top (7) and is designed for wirelessly supplying energy to a temperature control apparatus for food.

2. Table according to Claim 1, **characterized in that** the at least one first energy transmission device (20) is assigned an electronic control device (21) which is configured in such a manner that energy is supplied to the temperature control apparatus only when the temperature control apparatus is at least approximately arranged at a desired position.

3. Table according to either of the preceding claims, **characterized in that** the table (1) has a near field communication device.

4. Table according to one of the preceding claims, **characterized in that** the at least one first energy transmission device (20) comprises at least one coil (22) for inductively transmitting energy, said coil being arranged on one side of the table top (7) and being shielded at least towards another side of the table top (7).

5. Table according to one of the preceding claims, **characterized in that** a working frequency of the at least one first energy transmission device (20) is less than 150 kHz, preferably 0.8 to 150 kHz, particularly preferably 70 kHz.

6. Table according to one of the preceding claims, **characterized in that** the at least one first energy transmission device (20) can be activated and/or can be deactivated with a switch operable by a user of the table (1) and/or by a master control system of the vehicle.

7. Table according to one of the preceding claims, **characterized in that** the table (1) comprises at least one second energy transmission device (20'), wherein the at least one second energy transmission device (20') is designed for wirelessly charging an electronic appliance.

8. Table according to Claim 7, **characterized in that** the at least one second energy transmission device (20') is designed for transmitting data between an electronic appliance and a master data network.

9. Table according to Claim 7 or 8, **characterized in that** the table top (7) has a first side and a second side opposite the latter, wherein the at least one first energy transmission device (20) is arranged on the first side and the at least one second energy transmission device (20') is arranged on the second side.

10. Table according to one of Claims 7 to 9, **characterized in that** the first and/or the second side of the table top (7) is provided with a holding device for holding the electronic appliance.

11. Table according to one of the preceding claims, **characterized in that** the table top (7) is mounted rotatably about 180° about a horizontal axis.

12. Table according to one of the preceding claims, **characterized in that** the table is rotatable or pivotable by means of at least one joint, wherein the at least one first energy transmission device (20) is connectable to an electrical system of the vehicle via cables running through the at least one joint.

13. Temperature control apparatus for food, comprising an energy receiving device (34) for interaction with a first energy transmission device (20) of a table according to one of Claims 1 to 12, wherein the energy receiving device (34) is designed for supplying a receptacle for food with energy for controlling the temperature of the food.

14. Temperature control apparatus according to Claim 13, **characterized in that** the energy receiving device (34) comprises at least one receiving coil (35) and an electronic control device.

15. Temperature control apparatus according to Claim 13, **characterized in that** the energy receiving device (34) is designed as a metallic base of the temperature control apparatus, and **in that** the temperature control apparatus comprises an RFID transponder.

16. Food temperature control system for a cabin of a vehicle, comprising a table according to one of Claims 1 to 12 and a temperature control apparatus according to one of Claims 13 to 15.

17. Method for controlling the temperature of food in a cabin of a vehicle, wherein a temperature control apparatus for food is provided, which comprises an energy receiving device (34), food to be temperature controlled is arranged in a receptacle for food, the temperature control apparatus is arranged with the receptacle on a table which comprises a table top (7) and at least one first energy transmission device (20), which is integrated in the table top (7), for wirelessly transmitting energy, and the at least one first energy transmission device (20) for transmitting energy to the energy receiving device (34) is operated in order to supply the receptacle with energy for controlling the temperature of the food.

## Revendications

1. Table pour une cabine d'un véhicule, qui comprend un plateau de table (7) et au moins un premier dispositif de transfert d'énergie (20), **caractérisée en ce que** l'au moins un premier dispositif de transfert d'énergie (20) est intégré dans le plateau de table (7) et est réalisé de manière à alimenter en énergie sans fil un dispositif de régulation de température d'aliments.

2. Table selon la revendication 1, **caractérisée en ce qu'**un dispositif de commande électronique (21) est associé à l'au moins un premier dispositif de transfert d'énergie (20), lequel est prévu de telle sorte qu'une alimentation en énergie du dispositif de régulation de température ne soit effectuée que lorsque le dispositif de régulation de température est disposé au moins approximativement dans une position de consigne.

3. Table selon l'une quelconque des revendications précédentes, **caractérisée en ce que** la table (1) présente un dispositif de communication en champ proche.

4. Table selon l'une quelconque des revendications précédentes, **caractérisée en ce que** l'au moins un premier dispositif de transfert d'énergie (20) comprend au moins une bobine (22) pour le transfert d'énergie par induction, laquelle est disposée d'un côté du plateau de table (7) et est pourvue d'un blindage au moins vers un autre côté du plateau de table (7).

5. Table selon l'une quelconque des revendications précédentes, **caractérisée en ce qu'**une fréquence de travail de l'au moins un premier dispositif de transfert d'énergie (20) est inférieure à 150 kHz, de préférence vaut de 0,8 à 150 kHz, particulièrement préférablement vaut 70 kHz.

6. Table selon l'une quelconque des revendications précédentes, **caractérisée en ce que** l'au moins un premier dispositif de transfert d'énergie (20) peut être activé et/ou désactivé par un commutateur pouvant être actionné par un utilisateur de la table (1) et/ou par un système de commande maître du véhicule.

7. Table selon l'une quelconque des revendications précédentes, **caractérisée en ce que** la table (1) comprend au moins un deuxième dispositif de transfert d'énergie (20'), l'au moins un deuxième dispositif de transfert d'énergie (20') étant réalisé pour charger sans fil un appareil électronique.

8. Table selon la revendication 7, **caractérisée en ce que** l'au moins un deuxième dispositif de transfert d'énergie (20') est réalisé pour transférer des données entre un appareil électronique et un réseau de données maître.

9. Table selon la revendication 7 ou 8, **caractérisée en ce que** le plateau de table (7) présente un premier côté et un deuxième côté opposé à celui-ci, l'au moins un premier dispositif de transfert d'énergie (20) étant disposé au niveau du premier côté et l'au moins deuxième dispositif de transfert d'énergie (20') étant disposé au niveau du deuxième côté.

10. Table selon l'une quelconque des revendications 7 à 9, **caractérisée en ce que** le premier et/ou le deuxième côté du plateau de table (7) est/sont pourvu(s) d'un dispositif de retenue pour retenir l'appareil électronique.

11. Table selon l'une quelconque des revendications précédentes, **caractérisée en ce que** le plateau de table (7) est supporté de manière à pouvoir tourner de 180° autour d'un axe horizontal.

12. Table selon l'une quelconque des revendications précédentes, **caractérisée en ce que** la table peut tourner ou pivoter au moyen d'au moins une articulation, l'au moins un premier dispositif de transfert d'énergie (20) pouvant être connecté par le biais de câbles s'étendant à travers l'au moins une articulation à un réseau de bord du véhicule.

13. Dispositif de régulation de température d'aliments comprenant un dispositif récepteur d'énergie (34) destiné à coopérer avec un premier dispositif de transfert d'énergie (20) d'une table selon l'une quelconque des revendications 1 à 12, le dispositif récepteur d'énergie (34) étant réalisé de manière à alimenter en énergie un support d'aliments en vue de réguler la température des aliments.

14. Dispositif de régulation de température selon la revendication 13, **caractérisé en ce que** le dispositif récepteur d'énergie (34) comprend au moins une bobine réceptrice (35) et un dispositif de commande électronique.

15. Dispositif de régulation de température selon la revendication 13, **caractérisé en ce que** le dispositif récepteur d'énergie (34) est réalisé sous la forme d'un fond métallique du dispositif de régulation de température et **en ce que** le dispositif de régulation de température comprend un transpondeur RFID.

16. Système de régulation de température d'aliments pour une cabine d'un véhicule, comprenant une table selon l'une quelconque des revendications 1 à 12 et un dispositif de régulation de température selon l'une quelconque des revendications 13 à 15.

17. Procédé de régulation de température d'aliments dans une cabine d'un véhicule, dans lequel il est prévu un dispositif de régulation de température d'aliments qui comprend un dispositif récepteur d'énergie (34), des aliments à réguler en température sont disposés dans un support d'aliments, le dispositif de régulation de température est disposé avec le support sur une table qui comprend un plateau de table (7) et au moins un premier dispositif de transfert d'énergie (20) intégré dans le plateau de table (7) pour le transfert d'énergie sans fil, et l'au moins un premier dispositif de transfert d'énergie (20) est utilisé pour transférer de l'énergie au dispositif récepteur d'énergie (34) pour alimenter le support en énergie en vue de la régulation de température des aliments.
